# EUROPEAN PATENT APPLICATION

(11) **EP 4 307 057 A1**
(43) Date of publication of application: **17.01.2024**
(21) Application number: 21930268.4
(22) Date of filing: 21.09.2021
(51) Int. Cl.: G05B 19/042

(54) **SYSTEM AND METHOD FOR CONTROLLING PLURALITY OF MOVEMENT MECHANISMS**

(30) Priority: 11.03.2021 JP 2021039468
(71) Applicant: OMRON Corporation, Kyoto 600-8530 (JP)
(72) Inventor: MATSUNAGA, Daisuke, Kyoto-shi, Kyoto 600-8530 (JP); FORNAS, David, 08019 Barcelona (ES)
(74) Representative: Mewburn Ellis LLP
(86) International application number: PCT/JP2021/034472
(87) International publication number: WO 2022/190420

(57) **Abstract**

To increase the extensibility of a system and a method for controlling a plurality of movement mechanisms. An operation terminal (400) outputs a first command (Cm1) for a specific movement mechanism (200) to an integrated control device (100). The integrated control device (100) generates a second command (Cm2) corresponding to the specific movement mechanism (200) on the basis of the first command (Cm1) and outputs the second command (Cm2) to a specific control device (250). The integrated control device (100) or the specific control device (250) generates an operation profile on the basis of the second command (Cm2). The operation profile defines a temporal change in an operation of the specific movement mechanism (200). The specific control device (250) controls the specific movement mechanism (200) on the basis of the operation profile.

## Description

### TECHNICAL FIELD

The present disclosure relates to a system and a method for controlling plurality of movement mechanisms.

### BACKGROUND ART

A control system for controlling a plurality of movement mechanisms has been known in the past. For example, Japanese Patent Laying-Open No. 2019-79344 (PTL 1) discloses a control system capable of teaching a plurality of respective network-connected driving devices operations of corresponding control targets at the same time by using a single teaching device.

### CITATION LIST

### PATENT LITERATURE

PTL 1: Japanese Patent Laying-Open No. 2019-79344

### SUMMARY OF INVENTION

### TECHNICAL PROBLEM

In PTL 1, when a driving device that is a control target and includes a command system different from a command system of a teaching device is added to a control system, it is not possible to operate the control target by using the teaching device. The control system disclosed in PTL 1 has room for improvement in extensibility.

The present disclosure has been devised to solve the problem as described above. An object of the present disclosure is to increase the extensibility of a system and a method for controlling a plurality of movement mechanisms.

### SOLUTION TO PROBLEM

A system according to an aspect of the present disclosure includes a plurality of control devices; an integrated control device; and an operation terminal. The plurality of control devices respectively controls a plurality of movement mechanisms. The integrated control device outputs a command for each of the plurality of movement mechanisms to a control device that controls the movement mechanism. The operation terminal outputs a first command for a specific movement mechanism to the integrated control device. The specific movement mechanism is any of the plurality of movement mechanisms. The integrated control device generates a second command corresponding to the specific movement mechanism on the basis of the first command and outputs the second command to a specific control device that controls the specific movement mechanism. The integrated control device or the specific control device generates an operation profile on the basis of the second command. The operation profile defines a temporal change in an operation of the specific movement mechanism. The specific control device controls the specific movement mechanism on the basis of the operation profile.

According to the disclosure, an operation command for any of the movement mechanisms from the operation terminal is converted by the integrated control device to a command corresponding to the movement mechanism. As a result, even when a movement mechanism including a command system different from a command system of the operation terminal is added to a control target of the system, it is possible to operate the movement mechanism by using the operation terminal without changing the command system of the operation terminal. The system described above makes it possible to increase the extensibility of the system for controlling the plurality of movement mechanisms.

According to the disclosure described above, the specific control device may generate the operation profile.

According to the disclosure, it is possible to distribute calculation load necessary to generate the operation profile to the plurality of control devices. This makes it possible to increase the processing efficiency of the integrated control device to make an operation by the operation terminal.

According to the disclosure described above, the integrated control device may generate the operation profile.

According to the disclosure, the integrated control device including pieces of control information related to the plurality of movement mechanisms generates an operation profile corresponding to an operation command from the operation terminal. When the operation command designates the plurality of movement mechanisms to operate in cooperation with each other, it is thus possible to prevent a certain movement mechanism in operation from interfering with an operation of another movement mechanism. In addition, it is not necessary for the plurality of control devices to generate respective operation profiles when the operation is made by the operation terminal. This makes it possible to reduce calculation load on a control device that is an operation target. As a result, it is possible to increase the processing efficiency of the control device.

According to the disclosure described above, the plurality of movement mechanisms may include a first type of movement mechanism and a second type of movement mechanism. The operation terminal may switch GUIs (Graphical User Interfaces) in accordance with a type of movement mechanism that is an operation target. The GUIs are each for setting a parameter of the movement mechanism that is the operation target.

According to the disclosure, the GUIs change in accordance with the type of movement mechanism selected by a user. This allows the user to learn the parameter necessary to operate the movement mechanism. The user does not have to learn the parameter specific to the type of movement mechanism in advance. This makes it possible to increase the operability of the plurality of movement mechanisms by the operation terminal.

A method for controlling a plurality of movement mechanisms according to another aspect of the present disclosure includes: outputting a first command for a specific movement mechanism to an integrated control device; generating a second command corresponding to the specific movement mechanism on the basis of the first command; outputting the second command to a specific control device that controls the specific movement mechanism; generating an operation profile on the basis of the second command; and controlling the specific movement mechanism on the basis of the operation profile. The specific movement mechanism is any of the plurality of movement mechanisms. The operation profile defines a temporal change in an operation of the specific movement mechanism. The integrated control device or the specific control device generates the operation profile.

According to the disclosure, an operation command for any of the movement mechanisms from the operation terminal is converted by the integrated control device to a command corresponding to the movement mechanism. As a result, even when a movement mechanism including a command system different from a command system of the operation command is added to a control target of the system, it is possible to operate the movement mechanism by using the method described above without changing the command system of the operation command. The method described above makes it possible to increase the extensibility of the method for controlling the plurality of movement mechanisms.

### ADVANTAGEOUS EFFECT OF INVENTION

A system or a method according to the present disclosure makes it possible to increase the extensibility by an integrated control device generating a second command corresponding to a specific movement mechanism on the basis of a first command.

### BRIEF DESCRIPTION OF DRAWINGS

Fig. 1 is a block diagram illustrating a configuration of a control system according to an embodiment 1 and a flow of control information together.
Fig. 2 is a flowchart illustrating an example of a flow of command transmission processing performed by a teaching pendant in Fig. 1.
Fig. 3 is a flowchart illustrating an example of a flow of command conversion processing performed by an integrated control device when a logic control unit in Fig. 1 receives an operation command from the teaching pendant.
Fig. 4 is a flowchart illustrating an example of a flow of processing performed by each of a plurality of control devices when the control device receives a command from the integrated control device in Fig. 1.
Fig. 5 is a block diagram illustrating a network configuration example of the control system in Fig. 1.
Fig. 6 is a block diagram illustrating a hardware configuration example of the integrated control device in Fig. 1.
Fig. 7 is a block diagram illustrating a hardware configuration example of a robot control device in Fig. 1.
Fig. 8 is a block diagram illustrating a hardware configuration example of a servo control device in Fig. 1.
Fig. 9 is a block diagram illustrating a hardware configuration example of the teaching pendant in Fig. 1.
Fig. 10 is a diagram illustrating an example of an operation dialog displayed on a touch panel in Fig. 9.
Fig. 11 is a diagram illustrating that a combo box in Fig. 10 is pushed down to expand.
Fig. 12 is a diagram illustrating an operation dialog with a robot selected in the combo box in Fig. 11.
Fig. 13 is a diagram illustrating an operation dialog with the robot selected in the combo box in Fig. 11.
Fig. 14 is a diagram illustrating an operation dialog with a servo selected in the combo box in Fig. 11.
Fig. 15 is a block diagram illustrating a configuration of a control system according to an embodiment 2 and a flow of control information together.
Fig. 16 is a flowchart illustrating an example of a flow of command conversion processing performed by an integrated control device when a logic control unit in Fig. 15 receives an operation command from a teaching pendant.
Fig. 17 is a flowchart illustrating an example of a flow of processing performed by each of a plurality of control devices when the control device receives a command from the integrated control device in Fig. 15.

### DESCRIPTION OF EMBODIMENTS

The following describes embodiments in detail with reference to the drawings. It is to be noted that the same or corresponding portions in the drawings are denoted by the same reference numerals and are not repeatedly described in principle.

### [Embodiment 1]

### <Application Example>

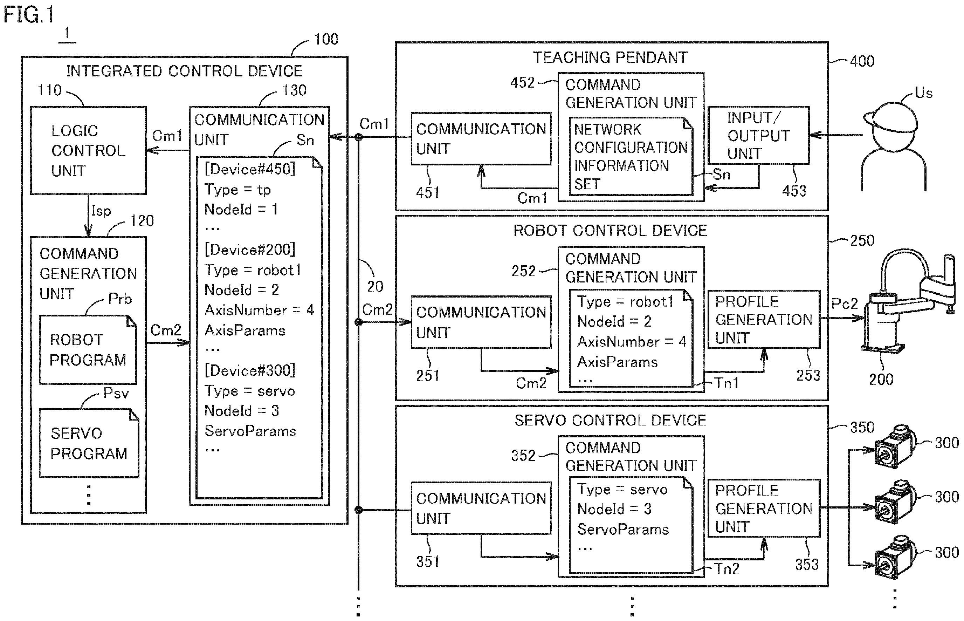

Fig. 1 is a block diagram illustrating a configuration of a control system 1 according to an embodiment 1 and a flow of control information together. As illustrated in Fig. 1, control system 1 includes an integrated control device 100, a robot control device 250, a servo control device 350, and a teaching pendant 400.

Integrated control device 100 is connected to robot control device 250, servo control device 350, and teaching pendant 400 (operation terminal) through a field network 20. Integrated control device 100 outputs, to both robot control device 250 and servo control device 350, commands for movement mechanisms to which the control devices are connected.

It is preferable to adopt a bus or a network that performs periodic communication as field network 20. EtherCAT (R), EtherNet/IP (R), DeviceNet (R), CompoNet (R), or the like is known as such a bus or network that performs periodic communication. EtherCAT (R) is preferable because the arrival time of data is guaranteed.

Robot control device 250 is connected to a robot 200 (movement mechanism). Robot control device 250 controls robot 200 on the basis of a command from integrated control device 100.

A custom robot with one or more axes or articulations may be used as robot 200. The custom robot is optionally created in accordance with an application. Further, any general-purpose robot such as a horizontal articulated (scalar) robot, a vertical articulated robot, a parallel link robot, or an orthogonal robot may be used as robot 200.

Servo control device 350 is connected to at least one servo 300 (movement mechanism). Servo control device 350 controls at least one servo 300 on the basis of a command from integrated control device 100.

Teaching pendant 400 receives an input from a user Us. Teaching pendant 400 generates, on the basis of the input, an operation command Cm1 (first command) for a movement mechanism (specific movement mechanism) designated by user Us from a plurality of movement mechanisms that is controlled by control system 1. Teaching pendant 400 outputs operation command Cm1 to integrated control device 100. Operation command Cm1 includes the identifier of teaching pendant 400, a desired operation on the movement mechanism, a target position after the operation, and the network node identifier of the control device that controls the movement mechanism. Fig. 1 assumes that operation command Cm1 is a command for robot 200.

Integrated control device 100 includes a logic control unit 110, a command generation unit 120, and a communication unit 130. When logic control unit 110 receives operation command Cm1 from teaching pendant 400, logic control unit 110 interprets operation command Cm1 and outputs a control instruction Isp corresponding to operation command Cm1 to command generation unit 120.

Command generation unit 120 interprets a control program corresponding to robot 200 on the basis of control instruction Isp to generate a command Cm2 for robot 200 and outputs command Cm2 to communication unit 130. Command Cm2 includes information indicating that command Cm2 is based on the operation command from teaching pendant 400. In Fig. 1, a robot program Prb and a servo program Psv are control programs corresponding to robot 200 and servo 300, respectively. Robot program Prb and servo program Psv may be each described by using, for example, a control programming language such as the V+ language or an NC (Numerical Control) control programming language such as G-code.

Communication unit 130 refers to a network configuration information set Sn and transmits command Cm2 to the control device that controls the movement mechanism designated by command Cm2. In Fig. 1, communication unit 130 transmits command Cm2 to a control device 250. Network configuration information set Sn includes pieces of information related to a plurality of movement mechanisms connected to field network 20. For example, network configuration information set Sn includes the type of certain movement mechanism, the network node identifier of the control device that controls the movement mechanism, and information specific to the type.

In the example of network configuration information set Sn illustrated in Fig. 1, there are provided sections for teaching pendant 400 and a plurality of respective movement mechanisms. In the section of teaching pendant 400, for example, the type of teaching pendant 400 is defined as a type teaching pendant and the network node identifier of teaching pendant 400 is defined as 1 as network configuration information of teaching pendant 400. In the section of robot 200, the type of robot 200 is defined as a robot1 type (first type), the network node identifier of robot control device 250 is defined as 2, the number of axes is defined as 4, and other axis parameters and the like are defined as network configuration information of robot 200. In the section of servo 300, the type of servo 300 is defined as a type servo (second type), the network node identifier of servo control device 350 is defined as 3, and other servo parameters and the like are defined as network configuration information of servo 300.

Robot control device 250 includes a communication unit 251, a command generation unit 252, and a profile generation unit 253. Communication unit 251 receives a command from integrated control device 100 and outputs the command to command generation unit 252.

Command generation unit 252 refers to network configuration information Tn2 related to robot 200. When the network node identifier designated by the command is 2, command generation unit 252 instructs profile generation unit 253 to generate an operation profile (target trajectory) corresponding to the command. Network configuration information Tn2 is included in the section of robot 200 in network configuration information set Sn. The operation profile defines a change in the TCP (Tool Center Point) of robot 200 corresponding to the time elapsed from the start of the operation corresponding to the command to the end of the operation. For example, the operation profile of robot 200 typically includes the position of the tip section (TCP) of robot 200 per time (a change in the position with respect to time), the speed of the tip section of robot 200 per time (a change in the speed with respect to time), the acceleration of the tip section of robot 200 per time (a change in the acceleration with respect to time), and/or the like.

Profile generation unit 253 generates an operation profile on the basis of the kinematics of robot 200. Profile generation unit 253 calculates a command value Pc2 (e.g., the positions of the plurality of respective articulations (joints) included in robot 200) on the basis of the operation profile and outputs command value Pc2 to robot 200. It is to be noted that an axis of a robot is included in an articulation in some cases. The following description thus also refers to an axis as an "axis or articulation" of a robot. In other words, the wording "axis" of a robot herein is used as wording including an axis and an articulation.

Servo control device 350 controls servo 300. Servo control device 350 includes a communication unit 351, a command generation unit 352, and a profile generation unit 353. Communication unit 351 receives a command from integrated control device 100 and outputs the command to command generation unit 352.

Command generation unit 352 refers to network configuration information Tn3 related to servo 300. When the network node identifier designated by the command is 3, command generation unit 352 instructs profile generation unit 353 to generate an operation profile corresponding to the command. Network configuration information Tn3 is included in the section of servo 300 in network configuration information set Sn. The operation profile defines a change in an operation of servo 300 corresponding to the time elapsed from the start of the operation corresponding to the command to the end of the operation. For example, the operation profile of servo 300 typically includes the angle of servo 300 per time (a change in the rotation angle with respect to time), the angular velocity of servo 300 per time (a change in the angular velocity with respect to time), the angular acceleration of servo 300 per time (a change in the angular acceleration with respect to time), and/or the like.

Profile generation unit 353 calculates a command value (e.g., the rotation angle of servo 300) on the basis of the generated operation profile and outputs the command value to servo 300.

Teaching pendant 400 includes a communication unit 451, a command generation unit 452, and an input/output unit 453. Input/output unit 453 displays a GUI (Graphical User Interface) of a system operation application for user Us. Input/output unit 453 outputs information input by user Us to input/output unit 453 to command generation unit 452. Input/output unit 453 includes, for example, a display, a touch panel, an operation button, and the like. Command generation unit 452 refers to network configuration information set Sn to generate operation command Cm1 on the basis of the input information from input/output unit 453 and outputs operation command Cm1 to communication unit 451. Communication unit 451 transmits operation command Cm1 to integrated control device 100.

Teaching pendant 400 may have an IDE (Integrated Development Environment) function of simulating the whole of control system 1. It may be possible for teaching pendant 400 to confirm the respective states of the plurality of movement mechanisms in real time (in each network cycle). Teaching pendant 400 may have functions of creating and displaying the respective programs of an NC program, a robot program, and an input/output/motion control program.

It is to be noted that network configuration information set Sn may be set in each of integrated control device 100 and teaching pendant 400, for example, in processing of initializing control system 1. In addition, information included in the network configuration information to which the plurality of movement mechanisms each refers may be transmitted to the movement mechanism along with command Cm2 on the basis of network configuration information set Sn.

In control system 1, an operation command for any of the movement mechanisms from teaching pendant 400 is converted by integrated control device 100 to a command corresponding to the movement mechanism. As a result, even when the control device of a movement mechanism including a command system different from the command system of teaching pendant 400 is added to control system 1, it is possible to operate the movement mechanism by using teaching pendant 400 without changing the command system of teaching pendant 400. Control system 1 makes it possible to increase the extensibility of the system and the method for controlling the plurality of movement mechanisms. In addition, control system 1 makes it possible to distribute calculation load necessary to generate the operation profile to the plurality of control devices. This makes it possible to increase the processing efficiency of integrated control device 100 to make an operation by teaching pendant 400.

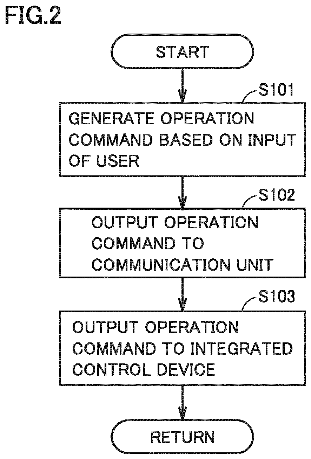

Fig. 2 is a flowchart illustrating an example of a flow of command transmission processing performed by teaching pendant 400 in Fig. 1. The processing illustrated in Fig. 2 is invoked by an unillustrated main routine for integrally controlling teaching pendant 400. The following describes a step simply as S.

As illustrated in Fig. 2, command generation unit 120 generates operation command Cm1 on the basis of an input of user Us in S101 and advances the processing to S102. Command generation unit 120 outputs operation command Cm1 to communication unit 451 in S102. Communication unit 451 transmits operation command Cm1 to integrated control device 100 in S103.

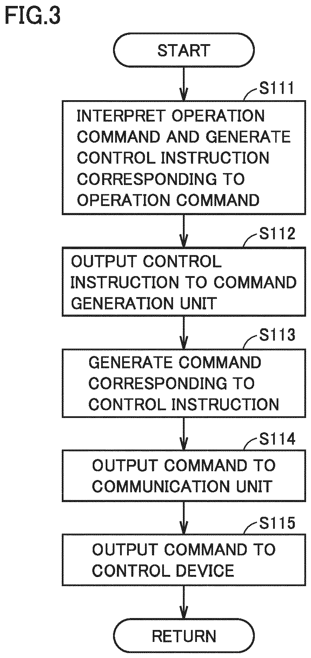

Fig. 3 is a flowchart illustrating an example of a flow of command conversion processing performed by integrated control device 100 when logic control unit 110 in Fig. 1 receives operation command Cm1 from teaching pendant 400. The processing illustrated in Fig. 3 is invoked by an unillustrated main routine for integrally controlling integrated control device 100.

As illustrated in Fig. 3, logic control unit 110 interprets operation command Cm1 and generates control instruction Isp corresponding to operation command Cm1 in S111 and advances the processing to S112. Logic control unit 110 outputs control instruction Isp to command generation unit 120 in S112. Command generation unit 120 generates command Cm2 corresponding to control instruction Isp in S113 and advances the processing to S114. Command generation unit 120 outputs command Cm2 to communication unit 130 in S114. Communication unit 130 makes an output to the control device (robot control device 250 in Fig. 1) that controls the movement mechanism (robot 200 in Fig. 1) corresponding to command Cm2 in S115 and returns the processing to the main routine.

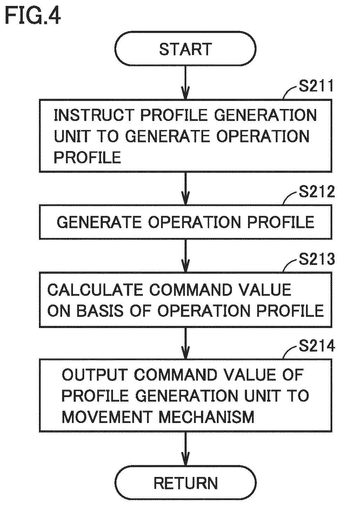

Fig. 4 is a flowchart illustrating an example of a flow of processing performed by each of control devices 250 and 350 when the control device receives a command from integrated control device 100 in Fig. 1. The processing illustrated in Fig. 4 is invoked by an unillustrated main routine for integrally controlling the control device.

As illustrated in Fig. 4, command generation unit 252 (352) instructs profile generation unit 253 (353) to create an operation profile in S211. Profile generation unit 253 (353) generates an operation profile corresponding to a command from integrated control device 100 in S212 and advances the processing to S213. Profile generation unit 253 (353) calculates a command value in S213 on the basis of the operation profile in S212 and advances the processing to S214. Profile generation unit 253 (353) outputs the command value in S213 to the movement mechanism in S214 and returns the processing to the main routine.

### <Network Configuration Example of Control System>

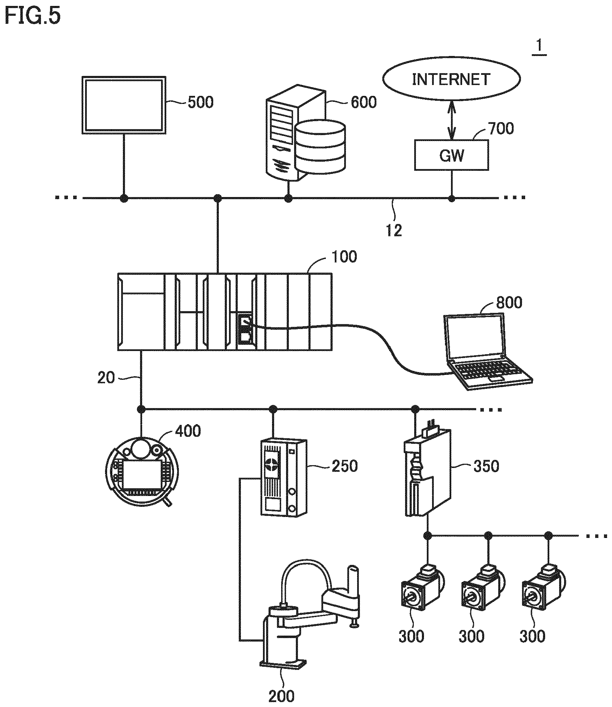

Fig. 5 is a block diagram illustrating a network configuration example of control system 1 in Fig. 1. As illustrated in Fig. 5, control system 1 is connected to a high-level network 12 and a support device 800 in addition to field network 20.

Integrated control device 100 is also connected to another device through high-level network 12. High-level network 12 is connected to the Internet through a gateway 700. The Internet is an external network. Ethernet (R) or EtherNet/IP (R), which is a typical network protocol, may be adopted for high-level network 12. More specifically, at least one display device 500 and at least one server device 600 may be connected to high-level network 12.

Display device 500 receives an operation from a user, outputs a command or the like corresponding to the user operation to integrated control device 100, and graphically displays a result of calculation by integrated control device 100 or the like.

A database system, a manufacturing execution system (MES: Manufacturing Execution System), or the like is intended as server device 600. The manufacturing execution system acquires information from a manufacturing device or equipment that is a control target and monitors and manages the whole of the production. The manufacturing execution system is also capable of dealing with order information, quality information, shipment information, or the like. This is not limitative, but a device that provides an information-based service may be connected to high-level network 12. Processing of acquiring the information from the manufacturing device or equipment that is a control target and doing a macroscopic analysis, a microscopic analysis, or the like is intended as the information-based service. For example, data mining, a machine learning tool, or the like is intended as the information-based service. The data mining extracts some characteristic tendency included in the information from the manufacturing device or equipment that is a control target. The machine learning tool is for machine learning based on information from equipment or machinery that is a control target.

Integrated control device 100 is configured to allow support device 800 to connect thereto. Support device 800 is a device that helps integrated control device 100 make preparations necessary to control the movement mechanisms. Specifically, support device 800 provides a development environment (such as a program creation/edit tool, a parser, and a compiler) of a program that is executed by integrated control device 100, a setting environment for setting configuration information (configuration) of each of integrated control device 100 and a variety of devices that are connected to integrated control device 100, a function of outputting a generated program to integrated control device 100, functions of making online correction and change in a program or the like that is executed on integrated control device 100, and the like.

Control system 1 includes integrated control device 100, support device 800, and display device 500 each as a different entity, but a configuration may be adopted in which all or portions of functions of these are integrated into a single device.

The use of integrated control device 100 is not limited to only one production facility, but integrated control device 100 is also used at another production facility. In addition, integrated control device 100 is used in a plurality of different lines even in one production facility in some cases.

### <Hardware Configuration Example of Integrated Control Device>

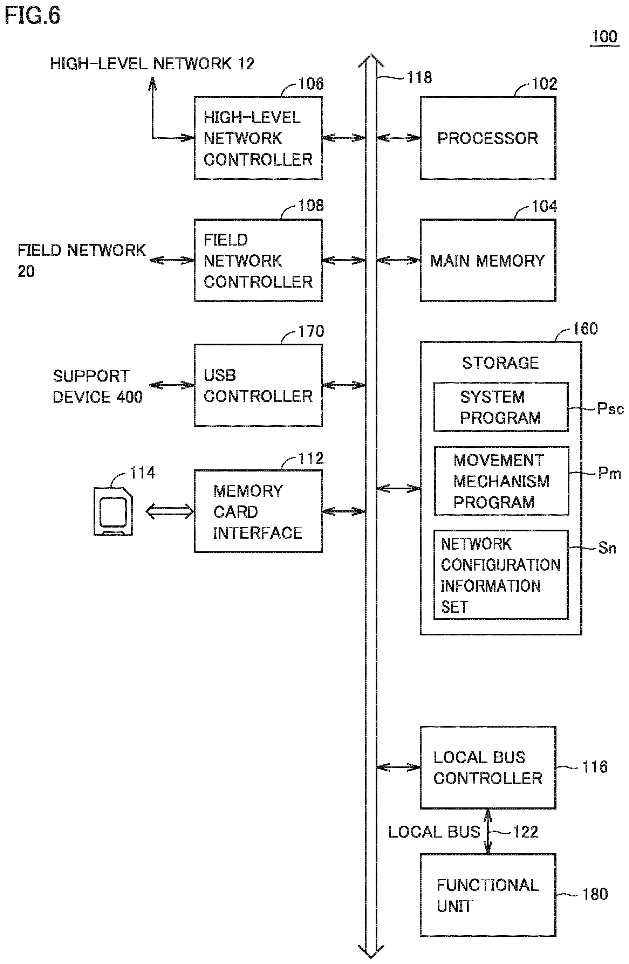

Fig. 6 is a block diagram illustrating a hardware configuration example of integrated control device 100 in Fig. 1. As illustrated in Fig. 6, integrated control device 100 includes a processor 102, a main memory 104, a storage 160, a memory card interface 112, a high-level network controller 106, a field network controller 108, a local bus controller 116, and a USB controller 170 that provides a USB (Universal Serial Bus) interface. These components are connected through a processor bus 118.

Processor 102 corresponds to a calculation processor that executes a control calculation. Processor 102 includes a CPU (Central Processing Unit), a GPU (Graphics Processing Unit), and/or the like. Specifically, processor 102 reads a program stored in storage 160 and expands and executes the program in main memory 104, thereby achieving a control calculation for a movement mechanism.

Main memory 104 includes a volatile storage device or the like such as a DRAM (Dynamic Random Access Memory) and/or an SRAM (Static Random Access Memory). Storage 160 includes, for example, a nonvolatile storage device or the like such as an SSD (Solid State Drive) and/or an HDD (Hard Disk Drive).

Storage 160 stores a system program Psc, a movement mechanism program Pm, and network configuration information set Sn. System program Psc includes a program (e.g., user program) for integrally controlling integrated control device 100 to achieve the respective functions of integrated control device 100. In other words, processor 102 that executes system program Psc corresponds to logic control unit 110, command generation unit 120, and communication unit 130 in Fig. 1. Movement mechanism program Pm includes robot program Prb and servo program Psv in Fig. 1.

Memory card interface 112 accepts a memory card 114 that is an example of an attachable and detachable storage medium. Memory card interface 112 allows any data to be read and written from and in memory card 114.

High-level network controller 106 exchanges data with any information processing device connected to high-level network 12 through high-level network 12 (e.g., local area network).

Field network controller 108 exchanges data with any device such as robot 200, servo 300, or teaching pendant 400 through field network 20.

Local bus controller 116 exchanges data with any functional unit 180 included in integrated control device 100 through a local bus 122. Functional unit 180 includes, for example, an analog I/O unit in charge of the input and/or output of an analog signal, a digital I/O unit in charge of the input and/or output of a digital signal, a counter unit that receives a pulse from an encoder or the like, and the like.

USB controller 170 exchanges data with any information processing device through USB connection. For example, support device 800 is connected to USB controller 170.

### <Hardware Configuration Example of Control Device>

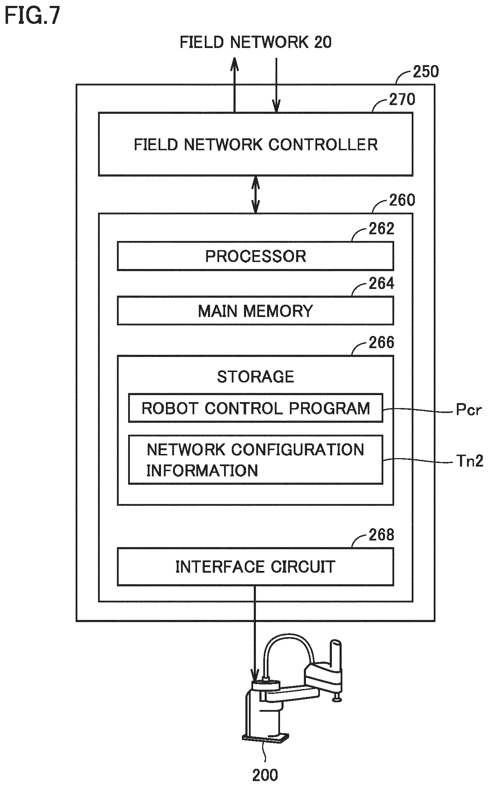

Fig. 7 is a block diagram illustrating a hardware configuration example of robot control device 250 in Fig. 1. As illustrated in Fig. 7, robot control device 250 includes a field network controller 270 and a control processing circuit 260.

Field network controller 270 exchanges data chiefly with integrated control device 100 through field network 20.

Control processing circuit 260 executes calculation processing necessary to drive robot 200. As an example, control processing circuit 260 includes a processor 262, a main memory 264, a storage 266, and an interface circuit 268.

Processor 262 executes a control calculation for driving robot 200. Main memory 264 includes, for example, a volatile storage device or the like such as a DRAM and/or an SRAM. Storage 266 includes, for example, a nonvolatile storage device or the like such as an SSD and/or an HDD. Processor 262 reads a program stored in storage 266 and expands and executes the program in main memory 264, thereby achieving a control calculation for robot 200.

Storage 266 stores a robot control program Per and network configuration information Tn2. Robot control program Per includes a program for integrally controlling robot control device 250 to achieve the respective functions of robot control device 250. In other words, processor 262 that executes robot control program Per corresponds to communication unit 251, command generation unit 252, and profile generation unit 253 in Fig. 1.

Interface circuit 268 outputs a command value output from processor 262 to robot 200.

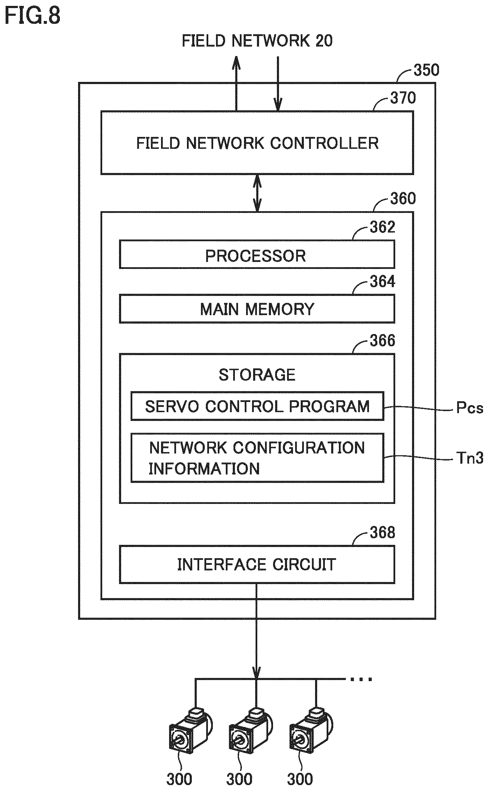

Fig. 8 is a block diagram illustrating a hardware configuration example of servo control device 350 in Fig. 1. As illustrated in Fig. 8, servo control device 350 includes a field network controller 370 and a control processing circuit 360.

Field network controller 370 exchanges data chiefly with integrated control device 100 through field network 20.

Control processing circuit 360 executes calculation processing necessary to drive servo 300. As an example, control processing circuit 360 includes a processor 362, a main memory 364, a storage 366, and an interface circuit 368.

Processor 362 executes a control calculation for driving servo 300. Main memory 364 includes, for example, a volatile storage device or the like such as a DRAM and/or an SRAM. Storage 366 includes, for example, a nonvolatile storage device or the like such as an SSD and/or an HDD. Processor 362 reads a program stored in storage 366 and expands and executes the program in main memory 364, thereby achieving a control calculation for servo 300.

Storage 366 stores a servo control program Pcs and network configuration information Tn3. Servo control program Pcs includes a program for integrally controlling servo control device 350 to achieve the respective functions of servo control device 350. In other words, processor 362 that executes servo control program Pcs corresponds to communication unit 351, command generation unit 352, and profile generation unit 353 in Fig. 1.

Interface circuit 368 outputs a command value output from processor 362 to servo 300.

### <Hardware Configuration Example of Teaching Pendant>

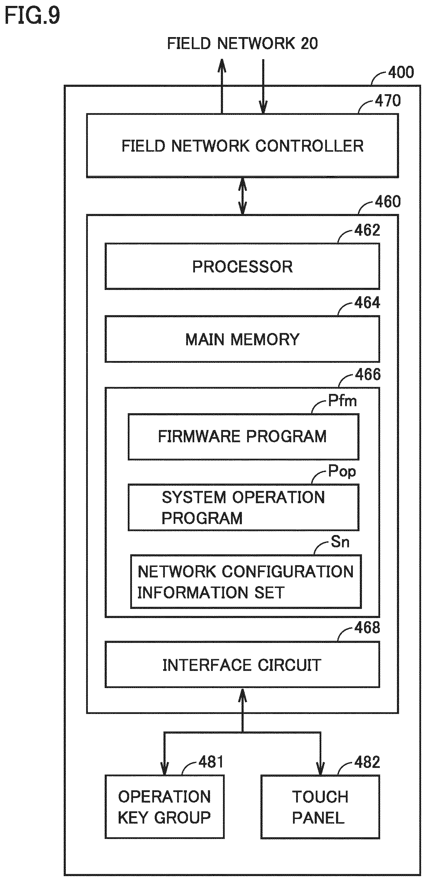

Fig. 9 is a block diagram illustrating a hardware configuration example of teaching pendant 400 in Fig. 1. As illustrated in Fig. 9, teaching pendant 400 includes a field network controller 470, a control processing circuit 460, an operation key group 481, and a touch panel 482.

Field network controller 470 exchanges data chiefly with integrated control device 100 through field network 20.

Control processing circuit 460 includes a processor 462, a main memory 464, a storage 466, and an interface circuit 468.

Processor 462 executes a control calculation for driving robot 200. Main memory 464 includes, for example, a volatile storage device or the like such as a DRAM and/or an SRAM. Storage 466 includes, for example, a nonvolatile storage device or the like such as an SSD and/or an HDD. Processor 462 reads a program stored in storage 466 and expands and executes the program in main memory 464, thereby achieving a variety of functions of teaching pendant 400.

Storage 466 stores a firmware program Pfm, a system operation program Pop, and network configuration information set Sn. Firmware program Pfm includes a program for integrally controlling teaching pendant 400 to achieve the respective functions of teaching pendant 400. System operation program Pop is executed by processor 462 to display a GUI on touch panel 482. The GUI is for allowing a user to input information related to an operation on each of the movement mechanisms. System operation program Pop generates an operation command for a movement mechanism designated by the user on the basis of the information input to the GUI and transmits the operation command to integrated control device 100. In other words, processor 462 that executes system operation program Pop corresponds to communication unit 451 and command generation unit 452 in Fig. 1.

Interface circuit 468 exchanges signals with operation key group 481 and touch panel 482. Operation key group 481 is an input device that receives a user operation. An operation key group 480 may include an indicator indicating an input state, a keyboard, and the like. Touch panel 482 functions as a display that displays a GUI of system operation program Pop and receives a touch operation of a user on the GUI.

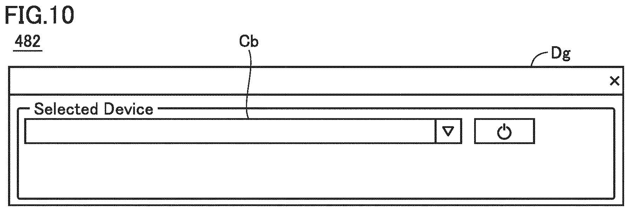

Fig. 10 is a diagram illustrating an example of an operation dialog Dg displayed on touch panel 482 in Fig. 9. As illustrated in Fig. 10, operation dialog Dg includes a combo box Cb for selecting a movement mechanism that is an operation target.

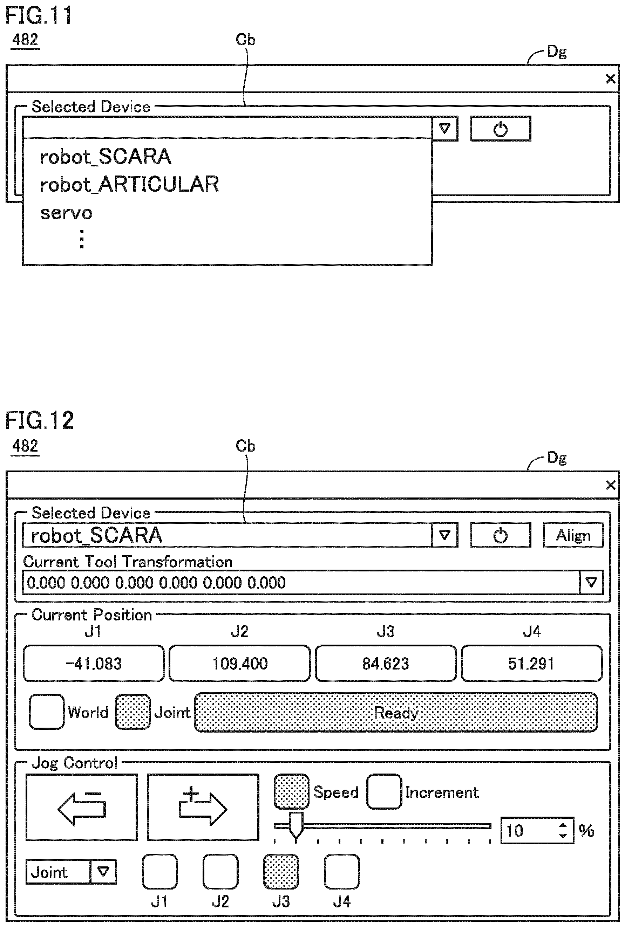

Fig. 11 is a diagram illustrating that combo box Cb in Fig. 10 is pushed down to expand. As illustrated in Fig. 11, robot_SCARA, robot_ARTICULAR, and servo are illustrated in combo box Cb as operation targets selectable to a user. It is to be noted that the type of robot_SCARA is the robot1 type and the type of robot ARTICULAR is a robot2 type.

Fig. 12 is a diagram illustrating operation dialog Dg with robot_SCARA selected in combo box Cb in Fig. 11. As illustrated in Fig. 12, it is possible to set operations related to four joints J1, J2, J3, and J4 for robot_SCARA. The robot1 type is the type of robot including four joints.

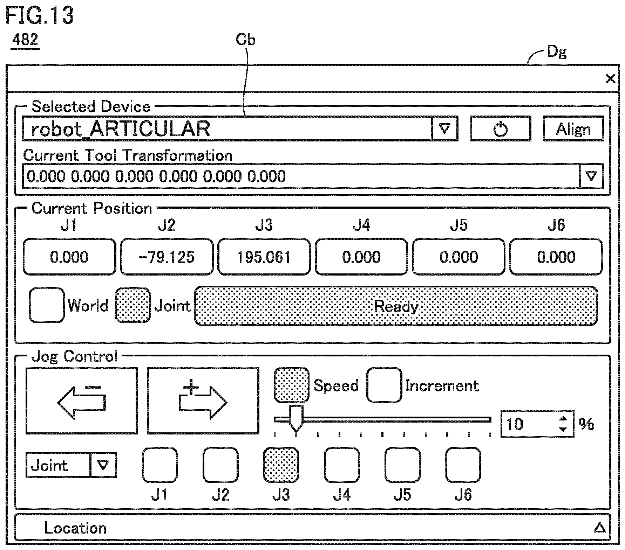

Fig. 13 is a diagram illustrating operation dialog Dg with robot ARTICULAR selected in combo box Cb in Fig. 11. As illustrated in Fig. 12, it is possible to set operations related to six joints J1, J2, J3, J4, J5, and J6 for robot ARTICULAR. The robot2 type is the type of robot including six joints.

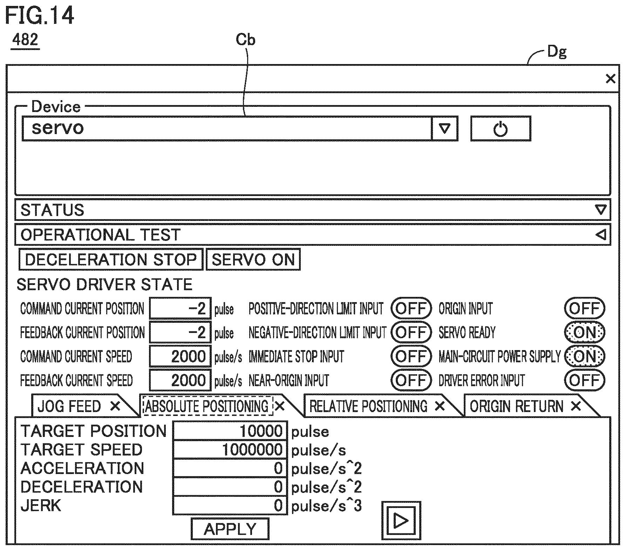

Fig. 14 is a diagram illustrating operation dialog Dg with servo selected in combo box Cb in Fig. 11. As illustrated in Fig. 14, it is possible to set an operation related to a servo driver for servo.

The GUIs change in accordance with the type of movement mechanism selected by a user. This allows the user to learn the parameter necessary to operate the movement mechanism. The user does not have to learn the parameter specific to the type of movement mechanism in advance. This makes it possible to increase the operability of the plurality of movement mechanisms by teaching pendant 400.

As described above, the system and the method according to embodiment 1 make it possible to increase the extensibility.

### [Embodiment 2]

In embodiment 1, the configuration has been described in which, when an operation is made on a certain movement mechanism by an operation terminal, the control device that controls the movement mechanism generates an operation profile. In an embodiment 2, a configuration will be described in which, when an operation is made on a certain movement mechanism by an operation terminal, the integrated control device generates an operation profile. According to the system and the method according to embodiment 2, the integrated control device including pieces of control information related to the plurality of movement mechanisms generates an operation profile corresponding to an operation command from the operation terminal. When the operation command designates the plurality of movement mechanisms to operate in cooperation with each other, it is thus possible to prevent a certain movement mechanism in operation from interfering with an operation of another movement mechanism. In addition, according to the system and the method according to embodiment 2, it is not necessary for the plurality of control devices to generate respective operation profiles when the operation is made by the operation terminal. This makes it possible to reduce calculation load on a control device that is an operation target. As a result, it is possible to increase the processing efficiency of the control device.

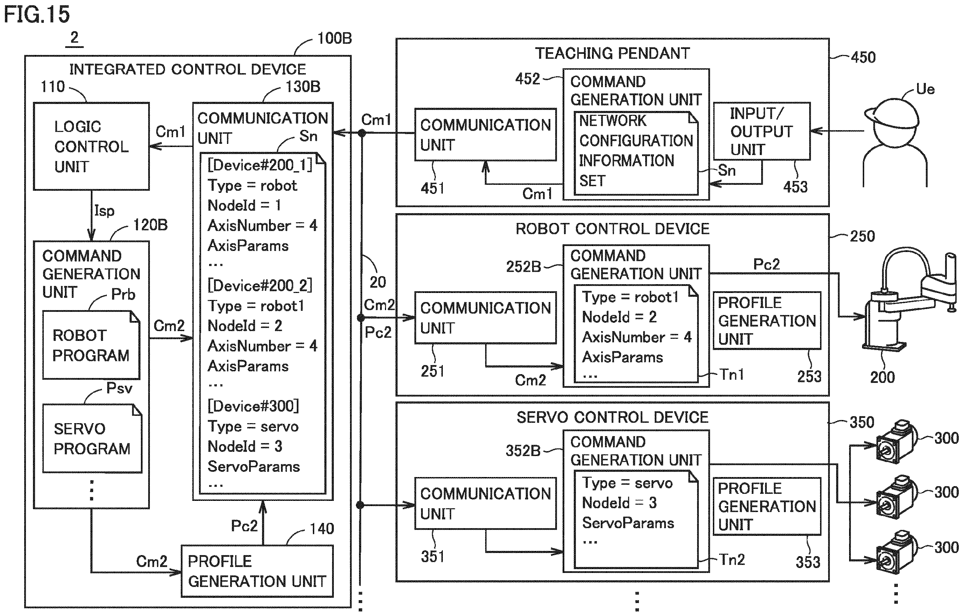

Fig. 15 is a block diagram illustrating a configuration of a control system 2 according to embodiment 2 and a flow of control information together. The configuration of control system 2 is a configuration in which command generation units 120, 252, and 352 and communication unit 130 in Fig. 1 are respectively replaced with command generation units 120B, 252B, and 352B and a communication unit 130B and a profile generation unit 140 is added. The configuration of control system 2 except for these is similar to the configuration of control system 1. The similar configuration will not be thus described repeatedly.

As illustrated in Fig. 15, command generation unit 120B outputs command Cm2 to communication unit 130 and instructs profile generation unit 140 to generate an operation profile corresponding to command Cm2 as in embodiment 1.

Profile generation unit 140 generates the operation profile corresponding to command Cm2 on the basis of the kinematics of a movement mechanism (robot 200 in Fig. 15) designated by command Cm2. Profile generation unit 140 calculates command value Pc2 for the movement mechanism on the basis of the operation profile and outputs command value Pc2 to communication unit 130B.

Communication unit 130B transmits command Cm2 and command value Pc2 to the movement mechanism designated by command Cm2.

Command generation unit 252B refers to network configuration information Tn2 related to robot 200. When the network node identifier designated by the command is 2 and the command is based on an operation command from teaching pendant 400, command generation unit 252B outputs the received command value to robot 200 along with the command.

Command generation unit 352B refers to network configuration information Tn3 related to servo 300. When the network node identifier designated by the command is 3 and the command is based on an operation command from teaching pendant 400, command generation unit 352B outputs the received command value to servo 300 along with the command.

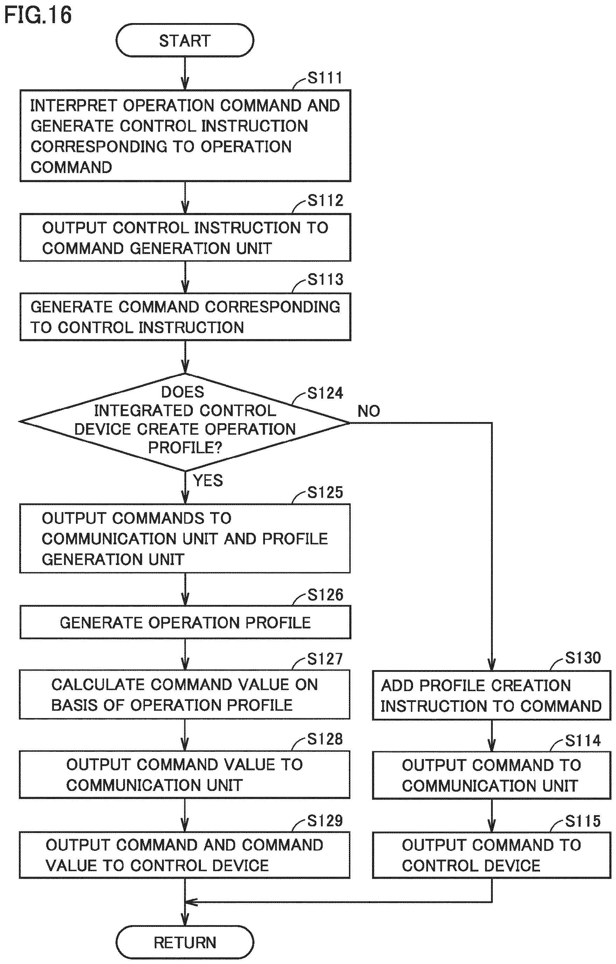

Fig. 16 is a flowchart illustrating an example of a flow of command conversion processing performed by integrated control device 100 when logic control unit 110 in Fig. 15 receives operation command Cm1 from teaching pendant 400. The flowchart illustrated in Fig. 16 is a flowchart in which S124 and S130 are added between S113 and S114 in Fig. 3 and S125 to S129 are added between S124 and "RETURN".

As illustrated in Fig. 16, logic control unit 110 executes S111 and S112 and command generation unit 120B executes S113 as in embodiment 1. Command generation unit 120B determines in S124 whether or not integrated control device 100 creates an operation profile. It is determined whether or not integrated control device 100 creates an operation profile, for example, in accordance with whether or not an operation corresponding to a command is a cooperative operation that asks the plurality of movement mechanisms to cooperate with each other. The cooperative operation includes, for example, a synchronized stop in which the plurality of movement mechanisms stops in synchronization with each other.

When integrated control device 100 creates no operation profile (NO in S124), command generation unit 120B adds a profile creation instruction to the command in S130 and advances the processing to S114. Command generation unit 120B outputs the command in S130 to communication unit 130 in S114. Communication unit 130 outputs the command to the control device that controls the movement mechanism designated by the command in S115 and returns the processing to the main routine.

When integrated control device 100 creates an operation profile (YES in S124), command generation unit 120B outputs commands to communication unit 130 and profile generation unit 140 in S125. Profile generation unit 140 generates an operation profile corresponding to the command in S126 and advances the processing to S127. Profile generation unit 140 calculates a command value in S127 on the basis of the operation profile and advances the processing to S128. Profile generation unit 140 outputs the command value to communication unit 130 in S128. Communication unit 130 outputs the command and the command value to the control device that controls the movement mechanism designated by the command in S129 and returns the processing to the main routine.

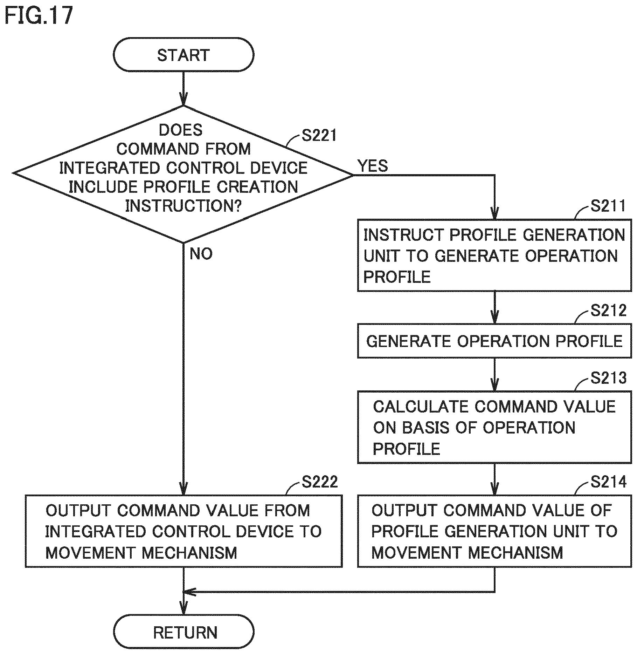

Fig. 17 is a flowchart illustrating an example of a flow of processing performed by each of control devices 250 and 350 when the control device receives a command from integrated control device 100 in Fig. 15. The flowchart illustrated in Fig. 17 is a flowchart in which S221 and S222 are added to the processing illustrated in Fig. 4.

As illustrated in Fig. 17, command generation unit 252B (352B) determines in S221 whether or not a command from integrated control device 100 includes a profile creation instruction. When the command includes no profile creation instruction (NO in S221), command generation unit 120B outputs a command value from integrated control device 100 to a movement mechanism that is an operation target in S222 and returns the processing to the main routine. When the command includes a profile creation instruction (YES in S221), command generation unit 252B (352B) and profile generation unit 253 (353) execute S211 to S214 as in embodiment 1 and return the processing to the main routine.

As described above, the system and the method according to embodiment 2 make it possible to increase the extensibility.

### <Supplement>

The present embodiment as described above includes the following technical ideas.
[Configuration 1] A system (1, 2) including:
   a plurality of control devices (250, 350) that respectively controls a plurality of movement mechanisms (200, 300);
   an integrated control device (100) that outputs a command for each of the plurality of movement mechanisms (200, 300) to a control device that controls the movement mechanism; and
   an operation terminal (400) that outputs a first command (Cm1) for a specific movement mechanism (200) to the integrated control device (100), the specific movement mechanism (200) being any of the plurality of movement mechanisms (200, 300), in which
   the integrated control device (100) generates a second command (Cm2) corresponding to the specific movement mechanism (200) on the basis of the first command (Cm1) and outputs the second command (Cm2) to a specific control device (250) that controls the specific movement mechanism (200),
   the integrated control device (100) or the specific control device (250) generates an operation profile on the basis of the second command (Cm2), the operation profile defining a temporal change in an operation of the specific movement mechanism (200), and
   the specific control device (250) controls the specific movement mechanism (200) on the basis of the operation profile.
[Configuration 2] The system (1) according to Configuration 1, in which the specific control device (250) generates the operation profile.
[Configuration 3] The system (2) according to Configuration 1, in which the integrated control device (100) generates the operation profile.
[Configuration 4] The system (1, 2) according to any of Configurations 1 to 3, in which
   the plurality of movement mechanisms (200, 300) includes a first type of movement mechanism (200) and a second type of movement mechanism (300), and
   the operation terminal (400) switches GUIs (Graphical User Interfaces) in accordance with a type of movement mechanism that is an operation target, the GUIs being each for setting a parameter of the movement mechanism that is the operation target.
[Configuration 5] A method for controlling a plurality of movement mechanisms (200, 300), the method including:
   outputting (S103) a first command (Cm1) for a specific movement mechanism (200) to an integrated control device (100), the specific movement mechanism (200) being any of the plurality of movement mechanisms (200, 300);
   generating (S113) a second command (Cm2) corresponding to the specific movement mechanism (200) on the basis of the first command (Cm1);
   outputting (S115) the second command (Cm2) to a specific control device (250) that controls the specific movement mechanism (200);
   generating (S212) an operation profile on the basis of the second command (Cm2), the operation profile defining a temporal change in an operation of the specific movement mechanism (200); and
   controlling (S214) the specific movement mechanism (200) on the basis of the operation profile, in which
   the integrated control device (100) or the specific control device (250) generates the operation profile.

The respective embodiments disclosed herein are also to be appropriately carried out in combination as long as inconsistency is avoided. The embodiments disclosed herein are examples, but should not be construed as being limiting from any point of view. The scope of the present invention is demonstrated by not the description above, but the claims. The scope of the present invention is intended to include the equivalents to the claims and all modifications within the scope of the claims.

### REFERENCE SIGNS LIST

1, 2: control system, 12: high-level network, 20: field network, 100: integrated control device, 102, 262, 362, 462: processor, 104, 264, 364, 464: main memory, 106: high-level network controller, 108, 270, 370, 470: field network controller, 110: logic control unit, 112: memory card interface, 114: memory card, 116: local bus controller, 118: processor bus, 120, 120B, 252, 252B, 352, 352B, 452: command generation unit, 122: local bus, 130, 130B, 251, 351, 451: communication unit, 140, 253, 353: profile generation unit, 160, 266, 366, 466: storage, 170: USB controller, 180: functional unit, 200: robot, 250: robot control device, 260, 360, 460: control processing circuit, 268, 368, 468: interface circuit, 300: servo, 350: servo control device, 400: teaching pendant, 453: input/output unit, 480, 481: operation key group, 482: touch panel, 500: display device, 600: server device, 700: gateway, 800: support device, Cb: combo box, Cm1: operation command, Dg: operation dialog, Isp: control instruction, Pc2: command value, Pcr: robot control program, Pcs: servo control program, Pm: movement mechanism program, Pop: system operation program, Prb: robot program, Psc: system program, Psv: servo program, Sn: network configuration information set, Tn2, Tn3: network configuration information, Us: user.

## Claims

1. A system comprising:
a plurality of control devices that respectively controls a plurality of movement mechanisms;
an integrated control device that outputs a command for each of the plurality of movement mechanisms to a control device that controls the movement mechanism; and
an operation terminal that outputs a first command for a specific movement mechanism to the integrated control device, the specific movement mechanism being any of the plurality of movement mechanisms, wherein
the integrated control device generates a second command corresponding to the specific movement mechanism on a basis of the first command and outputs the second command to a specific control device that controls the specific movement mechanism,
the integrated control device or the specific control device generates an operation profile on a basis of the second command, the operation profile defining a temporal change in an operation of the specific movement mechanism, and
the specific control device controls the specific movement mechanism on a basis of the operation profile.

2. The system according to claim 1, wherein the specific control device generates the operation profile.

3. The system according to claim 1, wherein the integrated control device generates the operation profile.

4. The system according to any one of claims 1 to 3, wherein
the plurality of movement mechanisms includes a first type of movement mechanism and a second type of movement mechanism, and
the operation terminal switches GUIs (Graphical User Interfaces) in accordance with a type of movement mechanism that is an operation target, the GUIs being each for setting a parameter of the movement mechanism that is the operation target.

5. A method for controlling a plurality of movement mechanisms, the method comprising:
outputting a first command for a specific movement mechanism to an integrated control device, the specific movement mechanism being any of the plurality of movement mechanisms;
generating a second command corresponding to the specific movement mechanism on a basis of the first command;
outputting the second command to a specific control device that controls the specific movement mechanism;
generating an operation profile on a basis of the second command, the operation profile defining a temporal change in an operation of the specific movement mechanism; and
controlling the specific movement mechanism on a basis of the operation profile, wherein
the integrated control device or the specific control device generates the operation profile.
